# FASCICULE DE BREVET EUROPEEN

(11) **EP 2 788 723 B1**
(45) Date de publication et mention de la délivrance du brevet: **12.07.2017**
(21) Numéro de dépôt: 12810374.4
(22) Date de dépôt: 07.12.2012
(51) Int. Cl.: G01F 1/00, E03F 5/12

(54) **OUVRAGE POUR SURVEILLER ET MAITRISER LE DEBIT ET LA QUALITE DES EFFLUENTS DANS UN COLLECTEUR DE DECHARGE**
KONSTRUKTION ZUR ÜBERWACHUNG UND STEUERUNG DER STRÖMUNG UND DER QUALITÄT VON ABWÄSSERN IN EINEM ABFLUSSVERTEILER
CONSTRUCTION FOR MONITORING AND CONTROLLING THE FLOW AND THE QUALITY OF EFFLUENTS IN A DISCHARGE MANIFOLD

(30) Priorité: 09.12.2011 FR 1161428
(43) Date de publication de la demande: 15.10.2014
(73) Titulaire: Métropole de Lyon, 69003 Lyon (FR); Institut National des Sciences Appliquées de Lyon, 69621 Villeurbanne Cedex (FR); Université Claude Bernard Lyon I, 69622 Villeurbanne Cedex (FR)
(72) Inventeur: VOLTE, Emmanuelle, F-69270 Cailloux Sur Fontaines (FR); VISIEDO, Régis, F-01400 Saint-georges Sur Renon (FR); LIPEME KOUYI, Gislain, F-69100 Villeurbanne (FR)
(74) Mandataire: Thibault, Jean-Marc
(86) Numéro de dépôt international: PCT/FR2012/052841
(87) Numéro de publication internationale: WO 2013/083932

(56) Documents cités:
- DE-U1- 20 103 875
- FR-A1- 2 847 687

## Description

La présente invention concerne le domaine technique des ouvrages assurant une régulation hydraulique des effluents dans un réseau unitaire d'assainissement et elle vise plus précisément le domaine technique lié aux ouvrages de dérivation dont la fonction est d'évacuer les pointes de ruissellement dans un collecteur de décharge.

Dans le domaine technique préféré de l'invention, il est connu de réaliser un ouvrage de dérivation appelé déversoir d'orage, aménagé sur un collecteur principal pour assurer le rejet direct, lorsque le débit à l'amont dépasse une certaine valeur, d'une partie des effluents dans un collecteur de collecte qui généralement débouche dans le milieu naturel ou plus rarement dans un bassin d'orage ou de dépollution.

Un tel déversoir d'orage est conçu pour déverser le débit excédentaire de pluie sans mise en charge et décantation dans la conduite amont et sans surcharge excessive de débit dans le réseau à l'aval. Bien entendu, un déversoir d'orage doit aussi laisser transiter le débit des effluents de temps sec sans déversement et sans faire trop chuter la vitesse de l'écoulement afin de limiter la décantation des matières en suspension dans l'effluent.

De tels déversoirs d'orage sont de plus en plus souvent pourvus d'équipements métrologiques pour surveiller, en particulier en termes de qualité et de débit, les flux déversés notamment dans le milieu naturel pour pouvoir connaître l'impact environnemental de ces rejets.

En pratique, il apparaît difficile d'obtenir une mesure fiable sur les flux déversés vers le milieu naturel. En effet, les déversoirs d'orage sont de conception très différente pour être adaptés aux réseaux dans lesquels ils sont installés ne permettant pas de disposer de techniques de mesure fiables et reconnues. De par le fonctionnement des déversoirs d'orage, les conditions dans lesquelles sont réalisées les mesures sont instables, imprévisibles avec de grandes plages de variation.

La demande de brevet FR 2 847 687 décrit un dispositif de régulation de débit pouvant se monter au sein des déversoirs d'orage ou à l'aval des bassins d'orage ou à l'aval des bassins d'orage ou de rétention. Ce dispositif de régulation comporte un canal de mesure comportant une chambre d'arrivée pour les effluents, mise en communication en amont, avec une chambre de déversement retenant une surverse. La chambre d'arrivée comporte un élargissement progressif et un système de dissipation d'énergie. Le canal de mesure est équipé d'un capteur de niveau mesurant le niveau de l'écoulement dans le canal de mesure.

La demande de brevet DE 20 103 875 U1 décrit un système d'évacuation des eaux usées comportant une partie d'entrée pour l'eau souillée séparée d'une sortie pour l'eau nettoyée, à l'aide d'un dispositif de nettoyage. Un élément de retenue est disposé du côté de la sortie pour de l'eau nettoyée afin de réaliser avec le dispositif de nettoyage, un espace d'accumulation pour des matières en suspension ou décantation. L'élément de retenue comporte une partie mobile apte à s'ouvrir pour communiquer avec la sortie, lorsque le niveau de l'eau dépasse une hauteur de retenue définie par l'élément de retenue.

La présente invention vise donc à remédier aux inconvénients de l'état de la technique en proposant une nouvelle technique permettant de contrôler de manière précise et fiable, en termes notamment de qualité et de quantité, des flux déversés en particulier dans le milieu naturel.

Pour atteindre un tel objectif, l'ouvrage pour surveiller et maîtriser le débit et la qualité des effluents dans un collecteur de décharge se présente sous la forme d'une boîte délimitant intérieurement:
- une chambre de mesure communiquant avec la chambre d'arrivée par un passage déversant s'étendant au-dessus d'une marche qui se prolonge à l'intérieur de la chambre de mesure par un déversoir, le dispositif de mesure comportant en outre un capteur de mesure du débit et de la qualité des effluents au niveau du déversoir latéral.

De plus, l'ouvrage selon l'invention peut présenter en outre en combinaison au moins l'une et/ou l'autre des caractéristiques additionnelles suivantes :
- le déversoir latéral est avec entonnement,
- le déversoir latéral avec entonnement comporte deux parois latérales d'entonnement convergentes entre elles,
- le déversoir latéral avec entonnement possède un angle d'entonnement compris entre 5° et 20°,
- le déversoir latéral avec entonnement comporte un fond de forme cylindro-conique pour assurer la décantation des effluents et la fiabilité des mesures,
- l'élargissement progressif de la chambre d'arrivée est relié à l'entrée des effluents et se trouve équipé du système de dissipation d'énergie, l'élargissement progressif débouchant dans la zone de décantation,
- l'élargissement progressif comporte également un système d'accélération de l'écoulement des effluents,
- la marche comporte une ouverture de passage équipée d'une vanne de vidange,
- le dispositif de mesure comporte de façon supplémentaire, des capteurs de métrologie adaptés à l'ouvrage,
- l'ouvrage comporte au moins un regard d'accès muni d'une trappe d'accès,
- l'ouvrage comporte une boîte réalisée en matériaux issus de filières de valorisation des matières,
- l'ouvrage se présente sous la forme d'une boîte préfabriquée.

Un autre objet de l'invention est de proposer un collecteur de décharge pourvu d'un ouvrage entre un collecteur principal et un milieu de décharge.

Selon l'invention, le collecteur comporte un ouvrage dont les entrées et sortie sont reliées respectivement à des parties amont et aval du collecteur de décharge.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique illustrant la mise en oeuvre d'un ouvrage dans un collecteur de décharge.
La **Figure 2** est une vue en perspective d'un exemple de réalisation d'un ouvrage conforme à l'invention.
La **Figure 3** est une vue de dessus en coupe d'un ouvrage conforme à l'invention.
La **Figure 4** est une vue en coupe longitudinale prise sensiblement selon les lignes IV-IV de la **Fig. 3****.**
La **Figure 5** est une vue en coupe transversale prise sensiblement selon les lignes V-V de la **Fig. 3****.**
La **Figure 6** est une vue en perspective en partie éclatée d'une partie de l'ouvrage conforme à l'invention.

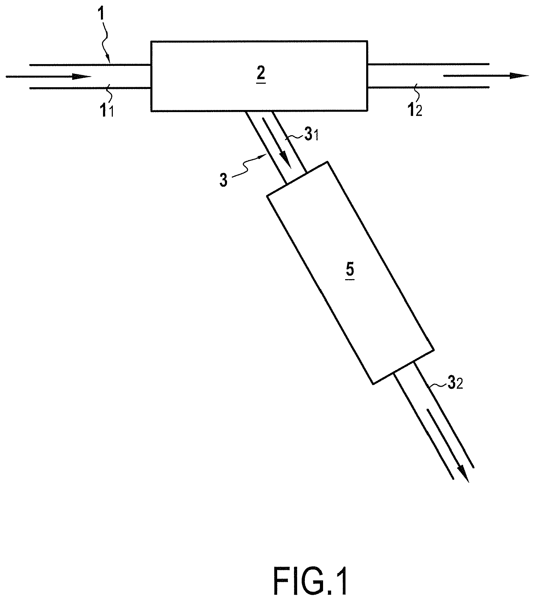

La **Fig. 1** illustre à titre d'exemple un réseau unitaire d'assainissement comportant un collecteur principal **1** sur lequel est installé un déversoir d'orage **2** permettant de délimiter par rapport au sens de déplacement des effluents, en amont, un collecteur amont **1₁** et en aval, un collecteur aval **1₂**. Le déversoir d'orage **2** est adapté pour dériver une partie des effluents vers un collecteur de décharge **3** lorsque le débit dans le collecteur amont **1₁** dépasse une certaine valeur de manière à limiter le débit dirigé par temps de pluie dans le collecteur aval **1₂.** Les effluents dérivés dans le collecteur de décharge **3** sont dirigés vers un milieu de décharge. Ce milieu de décharge est généralement le milieu naturel ou par exemple un bassin de dépollution dans lequel les effluents sont stockés avant d'être réinjectés dans le réseau d'assainissement.

Le déversoir d'orage **2** ne sera pas décrit plus précisément dans la mesure où il ne fait pas partie précisément de l'objet de l'invention et est bien connu de l'homme du métier.

L'objet de l'invention concerne un ouvrage **5** pour surveiller et maîtriser le débit des effluents dans le collecteur de décharge **3.** L'ouvrage **5** se présente sous la forme d'un corps creux ou d'une boîte installée sur le collecteur de décharge **3** qui comporte en amont de l'ouvrage **5,** dans le sens de déplacement des effluents, une partie amont **3₁** et en aval de l'ouvrage **5,** une partie aval **3₂.**

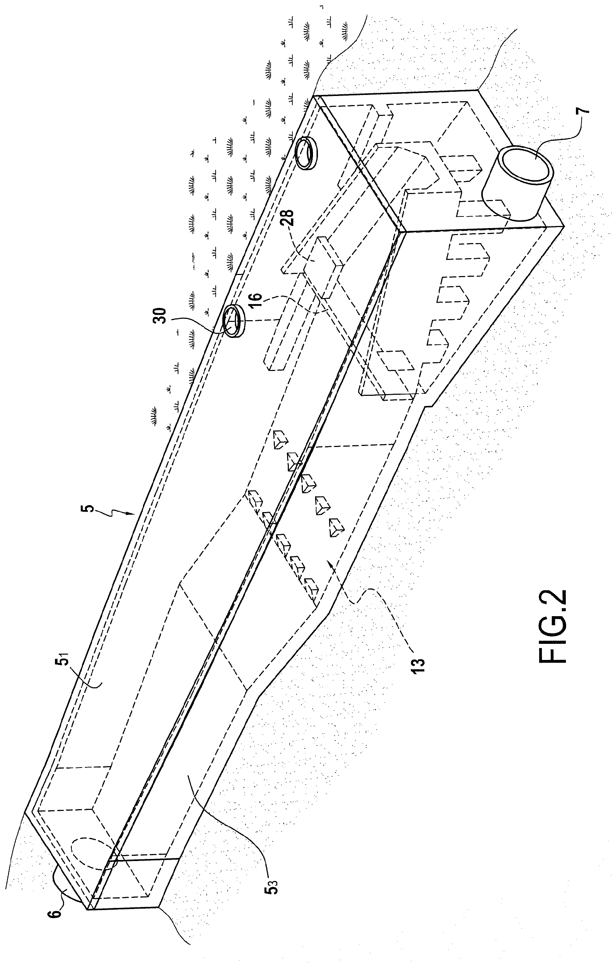

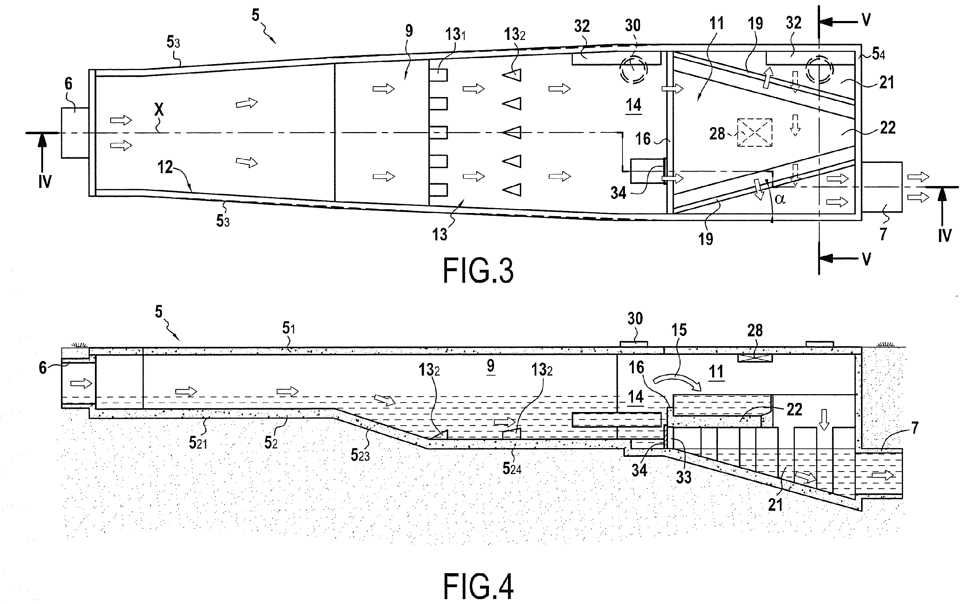

Tel que cela ressort plus précisément des **Fig. 2** à **4****,** l'ouvrage **5** comporte une arrivée ou entrée **6** pour les effluents, destinée à être raccordée à la partie amont **3₁** du collecteur de décharge **3,** et une sortie **7** pour les effluents, destinée à être raccordée à la partie aval **3₂** du collecteur de décharge **3.** L'entrée **6** et la sortie **7** sont connectées de manière étanche de toute manière appropriée avec les parties amont et aval du collecteur de décharge **3.**

Selon une variante préférée de réalisation, l'ouvrage **5** est réalisé par une boîte préfabriquée en usine et transportée pour être installée in situ. Bien entendu, dans certaines applications il peut être prévu de réaliser in situ l'ouvrage **5** conforme à l'invention. Selon une variante préférée de réalisation, l'ouvrage **5** est réalisé en matériaux issus de filières de valorisation de matières telles qu'en matière plastique recyclée ou en béton recyclé par exemple.

L'ouvrage **5** est réalisé par une boîte présentant une forme générale parallélépipédique dans le sens où elle présente une paroi de dessus **5₁** et une paroi de fond **5₂** raccordées entre elles par deux parois latérales **5₃,** la boîte pouvant être fermée par des parois d'extrémité **5₄** présentant l'entrée **6** et la sortie **7.**

La boîte selon l'invention délimite intérieurement une chambre d'arrivée **9** reliée à l'entrée **6** des effluents et communiquant avec une chambre de mesure **11** reliée à la sortie **7** des effluents.

La chambre d'arrivée **9** comporte un élargissement progressif **12,** un système de dissipation d'énergie **13** et une zone de décantation **14.**

L'élargissement progressif **12** est relié à l'entrée **6** des effluents délimité par une extrémité de la boîte dans l'exemple illustré. Bien entendu, la boîte **5** peut être pourvue d'une paroi d'extrémité **5₄** dans laquelle est aménagé un passage pour former l'entrée **6** de la boîte **5.** L'élargissement progressif **12** est conçu pour, à partir de l'entrée **6,** augmenter progressivement la section d'écoulement des effluents jusqu'à la zone de décantation **14.** L'élargissement progressif **12** est réalisé de toutes manières appropriées. Dans l'exemple illustré, les deux parois latérales **5₃** divergent à partir de l'entrée **6,** symétriquement par rapport à l'axe longitudinal **X** de la boîte, selon une angulation de quelques degrés à quelques dizaines de degrés.

Dans l'exemple illustré, l'élargissement progressif **12** intéresse également le fond **5₂** de la boîte qui comporte une première partie d'écoulement **5₂₁** reliée à l'entrée **6** et à un système d'accélération de l'écoulement **5₂₃.** Dans l'exemple illustré, le système d'accélération de l'écoulement **5₂₃** du fond est une pente reliée à une deuxième partie d'écoulement **5₂₄** reliée à la zone de décantation **14.** Bien entendu, le système d'accélération de l'écoulement pourrait être réalisé de manière différente. Dans l'exemple illustré, les parties d'écoulement **5₂₁** et **5₂₄** présentent une très légère pente d'écoulement.

L'élargissement progressif **12** participe à la stabilisation des effluents arrivant par l'entrée **6.** Selon une caractéristique de réalisation, l'élargissement progressif **12** est équipé du système de dissipation d'énergie **13.** Le système de dissipation d'énergie **13** comporte un ou plusieurs éléments dissipatifs de forme quelconque s'étendant à partir de la paroi de fond **5₂.** Dans l'exemple illustré, le système de dissipation d'énergie **13** comporte un premier élément de dissipation **13₁** et un deuxième élément de dissipation **13₂.** Ces deux éléments de dissipation **13₁, 13₂** sont aménagés dans la deuxième partie d'écoulement **5₂₄** dans l'exemple illustré et peuvent être réalisés de toute manière appropriée

La mise en oeuvre combinée de l'élargissement progressif **12** et du système de dissipation d'énergie **13** conduit à stabiliser le flux des effluents entrant qui arrive ensuite dans la zone de décantation **14.** Il est à noter que dans la zone de décantation **14,** les deux parois latérales **5₃** s'étendent parallèlement l'une à l'autre.

La chambre d'arrivée **9** communique par sa zone de décantation **14** avec la chambre de mesure **11,** à l'aide d'un passage déversant **15** s'étendant au-dessus d'une marche **16.** Il doit être compris que la zone de décantation **14** est fermée dans le sens d'écoulement des effluents par la marche **16** qui s'élève à partir de la paroi de fond **5₂** pour délimiter avec la paroi de dessus **5₁,** le passage déversant **15.**

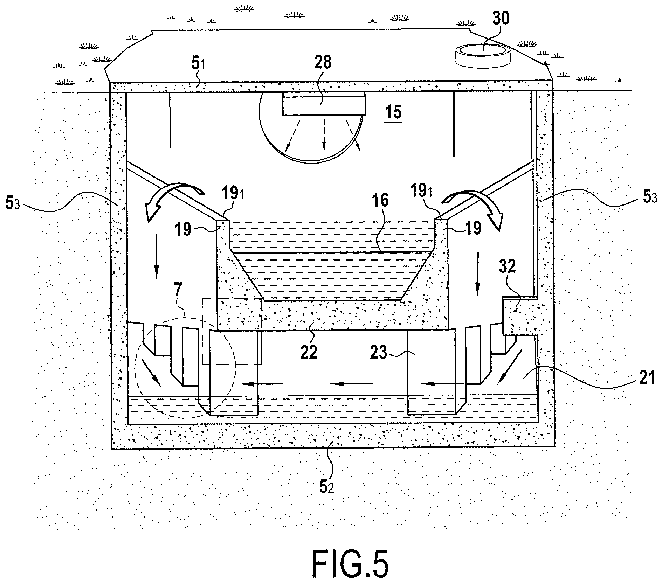

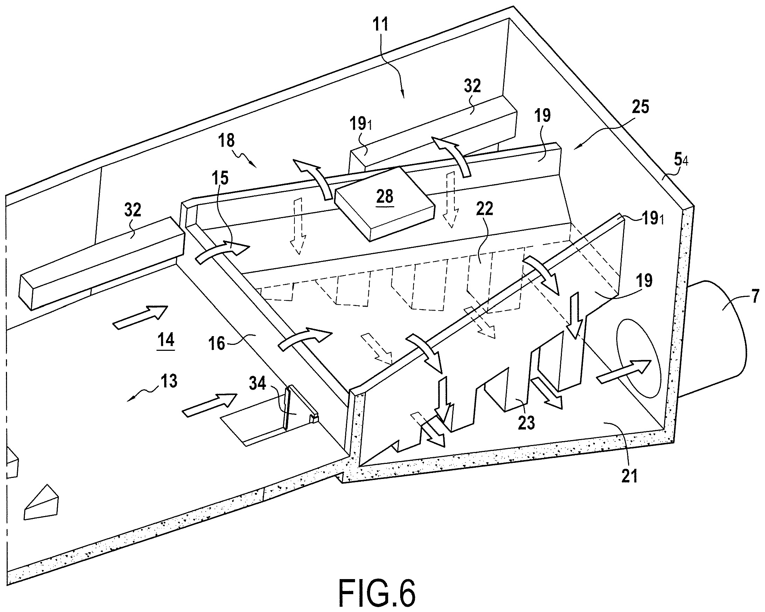

La marche **16** se prolonge à l'intérieur de la chambre de mesure **11,** par un déversoir latéral **18** qui dans l'exemple avantageux illustré aux **Fig. 2** à **6****,** est avec entonnement **(****Fig. 5** et **6****).** Le déversoir latéral avec entonnement **18** comporte deux parois latérales d'entonnement **19** s'étendant à partir de la marche **16** en convergeant entre elles, à partir de cette marche de manière sensiblement symétrique par rapport à l'axe longitudinal **X.** Les effluents provenant du passage déversant **15** sont donc amenés à se déverser latéralement de part et d'autre des parois d'entonnement **19.** Dans l'exemple illustré, les deux parois latérales d'entonnement **19** sont raccordées à la paroi d'extrémité **5₄** en étant écartées l'une de l'autre. Selon un exemple préféré de réalisation, le déversoir latéral avec entonnement **18** possède un angle d'entonnement α compris entre 5 et 20°. Cet angle d'entonnement α est pris entre l'axe longitudinal **X** d'ouvrage et la direction de la paroi d'entonnement **19.**

Les effluents sont recueillis dans une chambre de récupération **21** communiquant avec la sortie **7** aménagée dans l'exemple illustré, dans une paroi d'extrémité **5₄** de la boîte sur laquelle se raccordent les parois latérales **5₃,** la paroi de fond **5₂** et la paroi de dessus **5₁.**

Selon une variante avantageuse de réalisation, le déversoir latéral avec entonnement **18** comporte un fond **22** de forme cylindro-conique s'étendant entre les deux parois latérales d'entonnement **19.** Les deux parois latérales d'entonnement **19** sont ainsi fermées entre elles, avec la marche **16** et la paroi d'extrémité **5₄** pour constituer une sorte de cuve s'étendant à distance de la paroi de fond **5₂** de la boîte. Le fond **22** se trouve par exemple supporté par des piliers **23** permettant de réaliser une chambre de récupération **21** commune pour les effluents déversés de part et d'autre des parois latérales d'entonnement **19.**

Les effluents déversés à partir du passage **15** tombent ainsi dans ce fond **22** jusqu'à venir dépasser les bords supérieurs **19₁** des parois latérales d'entonnement **19** de sorte que le déversement des effluents s'effectue alors de part et d'autre de ces parois latérales d'entonnement **19.** Il est à noter que le fond **22** du déversoir latéral avec entonnement **18** assure la décantation des effluents. Il doit être considéré que lorsque le débit des effluents est suffisamment important pour traverser le passage déversant **15,** les effluents présentent un écoulement stabilisé au-dessus de ce déversoir latéral avec entonnement **18,** c'est-à-dire entre les deux parois latérales d'entonnement **19** et la marche **16.**

Ainsi, le déversoir latéral avec entonnement **18** délimite une zone de mesure **25** entre les deux parois latérales d'entonnement **19** et la marche **16.** Une telle zone de mesure **25** contient toujours, après le premier ruissellement, des effluents. Le niveau des effluents dans cette zone de mesure **25** s'élève jusqu'aux bords supérieurs **19₁** des parois latérales d'entonnement **19** lorsqu'aucun effluent n'arrive dans la chambre de mesure **11.** Lorsque le débit des effluents est suffisamment important pour traverser le passage déversant **15,** alors le niveau des effluents s'élève dans la zone de mesure **25** à un niveau supérieur par rapport aux bords supérieurs **19₁** des parois latérales d'entonnement **19.** Ainsi, il peut apparaître une différence de niveau par exemple de quelques centimètres à quelques dizaines de centimètres.

La chambre de mesure **11** est équipée d'un dispositif de mesure **28** adapté pour réaliser des relevés métrologiques dans la zone de mesure **25.** Le dispositif de mesure **28** comporte au moins un capteur de mesure du débit et de la qualité des effluents au niveau du déversoir latéral avec entonnement **18** c'est-à-dire dans la zone de mesure **25.**

Le dispositif de mesure **28** comporte ainsi au moins un capteur apte à réaliser une mesure en continu du débit des effluents dans la zone de mesure **25.** Ce capteur de mesure peut être de tout type connu en soi avec ou sans contact. Par exemple, le capteur de mesure de débit est du type à ultrasons placé au-dessus de la surface d'entonnement du déversoir latéral **18.** Dans l'exemple illustré, le capteur de mesure **28** est schématisé comme étant par exemple fixé sous la paroi de dessus **5₁,** à l'aplomb de la zone de mesure **25.** Il est à noter que dans la zone de mesure **25,** le niveau des effluents varie peu et l'écoulement des effluents est stable en surface. Il s'ensuit que les mesures de débit peuvent être réalisées avec une grande précision. Le fond **22** du déversoir latéral avec entonnement **18** contribue ainsi à la fiabilité des mesures.

Le dispositif de mesure **28** comporte également au moins un capteur permettant de surveiller la qualité des rejets. Ainsi, le dispositif de mesure **28** comporte au moins un capteur de prélèvement ou un capteur du type turbidimètre, spectromètre UV visible, capteurs à micro-ondes, etc. agissant dans la zone de mesure **25.** D'une manière générale, il doit être considéré que le dispositif de mesure **28** comporte des capteurs de métrologie adaptés à l'ouvrage et aux grandeurs physiques à mesurer.

Selon une variante préférée de réalisation, l'ouvrage **1** comporte au moins un regard d'accès **30** aménagé par exemple dans la paroi de dessus **5₁** de la boîte. Ce passage d'accès **30** est muni d'une trappe d'accès pour permettre à une personne de rentrer à l'intérieur de l'ouvrage pour assurer les opérations de maintenance.

Par exemple, il peut être prévu de réaliser à l'intérieur de la boîte, à l'aplomb de chaque regard d'accès, une banquette **32** de réception du personnel, s'élevant au-dessus du fond **5₂** de la boîte.

Selon une autre caractéristique de l'invention, la marche **16** est aménagée pour présenter une ouverture **33** pourvue d'une vanne de vidange **34** pilotée manuellement ou automatiquement. L'ouverture de passage **33** permet de vidanger la chambre d'arrivée **9** dans la chambre de récupération **21.**

Dans l'exemple préféré de réalisation illustré aux **Fig. 2** à **6****,** le déversoir latéral **18** est avec entonnement à deux parois latérales **19** déversantes. Une telle réalisation permet d'obtenir une lame d'effluents particulièrement bien stabilisée de sorte que des mesures précises peuvent être obtenues. Un tel mode de réalisation présente également l'avantage de pouvoir réaliser une chambre de mesure de faible longueur. A titre d'exemple, il peut être envisagé de réaliser une boîte **5** avec une longueur totale inférieure à 10 mètres.

Pour certaines applications, il est à noter que le déversoir latéral **18** peut comporter une seule paroi déversante convergente vers le milieu de la chambre de mesure **11.** Un tel mode de réalisation revient à supprimer l'une des deux parois latérales d'entonnement **19** du déversoir latéral illustré aux **Fig. 2** à **6****.** Selon un autre mode de réalisation, le déversoir latéral **18** peut comporter une ou deux parois latérales déversantes s'étendant parallèlement à l'axe longitudinal **X** de l'ouvrage. Selon cet autre mode de réalisation, le déversoir latéral **18** ne comporte pas d'entonnement.

Il ressort de la description qui précède que l'ouvrage **5** selon l'invention peut être facilement installé sur les collecteurs de décharge **3.** A cet égard, l'objet de l'invention vise en pratique, à réaliser une gamme d'ouvrages **5** dimensionnés pour s'adapter au diamètre des collecteurs de décharge et au débit maximum de tels collecteurs. Il est à noter que le dimensionnement de l'ouvrage **5** tient compte du débit maximum des effluents dans le collecteur de décharge **3** de sorte que l'ouvrage **5** ne forme pas une retenue pour les effluents.

## Revendications

1. Ouvrage pour surveiller et maîtriser le débit et la qualité des effluents dans un collecteur de décharge **(3),** l'ouvrage se présentant sous la forme d'une boîte équipée d'une entrée **(6)** des effluents, d'une sortie **(7)** des effluents et délimitant intérieurement une chambre d'arrivée **(9)** pour les effluents comportant un élargissement progressif **(12)** et un système de dissipation d'énergie **(13),** cette chambre d'arrivée **(9)** étant reliée à l'entrée **(6)** des effluents et comportant une zone de décantation **(14)** pour les effluents stabilisés par l'élargissement progressif **(12)** et le système de dissipation d'énergie **(13)** l'ouvrage étant muni d'un dispositif de mesure **(28)** comportant au moins un capteur de mesure du débit des effluents dans une chambre de mesure **(11), caractérisé en ce que** la chambre de mesure **(11)** communique avec la chambre d'arrivée **(9)** par un passage déversant **(15)** s'étendant au-dessus d'une marche **(16)** qui se prolonge à l'intérieur de la chambre de mesure par un déversoir latéral **(18),** le dispositif de mesure **(28)** comportant en outre un capteur de la qualité des effluents au niveau du déversoir latéral **(18).**

2. Ouvrage selon la revendication 1, **caractérisé en ce que** le déversoir latéral **(18)** est avec entonnement.

3. Ouvrage selon la revendication 2, **caractérisé en ce que** le déversoir latéral avec entonnement **(18)** comporte deux parois latérales **(19)** d'entonnement convergentes entre elles.

4. Ouvrage selon l'une des revendications 2 à 3, **caractérisé en ce que** le déversoir latéral avec entonnement **(18)** possède un angle d'entonnement compris entre 5° et 20°.

5. Ouvrage selon l'une des revendications 2 à 4, **caractérisé en ce que** le déversoir latéral avec entonnement **(18)** comporte un fond **(22)** de forme cylindro-conique pour assurer la décantation des effluents et la fiabilité des mesures.

6. Ouvrage selon la revendication 1, **caractérisé en ce que** l'élargissement progressif **(12)** de la chambre d'arrivée **(9)** est reliée à l'entrée **(6)** des effluents et se trouve équipée du système de dissipation d'énergie **(13),** l'élargissement progressif **(12)** débouchant dans la zone de décantation **(14).**

7. Ouvrage selon la revendication 6, **caractérisée en ce que** l'élargissement progressif **(12)** comporte également un système d'accélération de l'écoulement des effluents.

8. Ouvrage selon la revendication 1, **caractérisé en ce que** la marche **(16)** comporte une ouverture de passage **(33)** équipée d'une vanne de vidange **(34).**

9. Ouvrage selon la revendication 1, **caractérisé en ce que** le dispositif de mesure **(28)** comporte de façon supplémentaire, des capteurs de métrologie adaptés à l'ouvrage.

10. Ouvrage selon l'une des revendications 1 à 7, **caractérisé en ce qu'**il comporte au moins un regard d'accès **(30)** muni d'une trappe d'accès.

11. Ouvrage selon l'une des revendications 1 à 10, **caractérisé en ce qu'**il comporte une boîte réalisée en matériaux issus de filières de valorisation des matières.

12. Ouvrage selon l'une des revendications 1 à 11, **caractérisé en ce qu'**il se présente sous la forme d'une boîte préfabriquée.

13. Collecteur de décharge **(3)** destiné à être installé entre un collecteur principal **(1)** et un milieu de décharge, **caractérisé en ce qu'**il comporte un ouvrage **(5)** conforme à l'une des revendications 1 à 12 dont les entrées **(6)** et sortie **(7)** sont reliées respectivement à des parties amont **(3₁)** et aval **(3₂)** du collecteur de décharge **(3).**

## Patentansprüche

1. Konstruktion zur Überwachung und Steuerung der Strömung und der Qualität von Abwässern in einem Abflussverteiler (3), wobei die Konstruktion in Form eines Gehäuses vorhanden ist, das mit einem Eingang (6) für die Abwässer, einem Ausgang (7) für die Abwässer ausgestattet ist und innen eine Einlaufkammer (9) für die Abwässer begrenzt, umfassend eine progressive Erweiterung (12) und ein Energieableitungssystem (13), wobei diese Einlaufkammer (9) mit dem Eingang (6) der Abwässer verbunden ist und eine Absetzzone (14) für die stabilisierten Abwässer durch die progressive Erweiterung (12) und das Energieableitungssystem (13) umfasst, wobei die Konstruktion mit einer Messeinrichtung (28) versehen ist, umfassend mindestens einen Sensor zum Messen der Strömung der Abwässer in einer Messkammer (11), **dadurch gekennzeichnet, dass** die Messkammer (11) mit der Einlaufkammer (9) durch einen Überlaufdurchgang (15) in Verbindung steht, der sich über einer Stufe (16) erstreckt, die sich im Inneren der Messkammer durch einen seitlichen Überlauf (18) verlängert, wobei die Messvorrichtung (28) ferner einen Sensor für die Qualität der Abwässer im Bereich des seitlichen Überlaufs (18) umfasst.

2. Konstruktion gemäß Anspruch 1, **dadurch gekennzeichnet, dass** der seitliche Überlauf (18) mit Auffangbecken ist.

3. Konstruktion gemäß Anspruch 2, **dadurch gekennzeichnet, dass** der seitliche Überlauf mit Auffangbecken (18) zwei seitliche Auffangwände (19) umfasst, die zueinander konvergierend sind.

4. Konstruktion gemäß einem der Ansprüche 2 bis 3, **dadurch gekennzeichnet, dass** der seitliche Überlauf mit Auffangbecken (18) einen Auffangwinkel zwischen 5° und 20° besitzt.

5. Konstruktion gemäß einem der Ansprüche 2 bis 4, **dadurch gekennzeichnet, dass** der seitliche Überlauf mit Auffangbecken (18) einen Boden (22) von zylindrisch konischer Form umfasst, um das Absetzen der Abwässer und die Zuverlässigkeit der Messungen zu gewährleisten.

6. Konstruktion gemäß Anspruch 1, **dadurch gekennzeichnet, dass** die progressive Erweiterung (12) der Einlaufkammer (9) mit dem Eingang (6) der Abwässer verbunden ist und mit einem Energieableitungssystem (13) ausgestattet ist, wobei die progressive Erweiterung (12) in der Absetzzone (14) mündet.

7. Konstruktion gemäß Anspruch 6, **dadurch gekennzeichnet, dass** die progressive Erweiterung (12) auch ein System zur Beschleunigung des Abfließens der Abwässer umfasst.

8. Konstruktion gemäß Anspruch 1, **dadurch gekennzeichnet, dass** die Stufe (16) eine Durchgangsöffnung (33) umfasst, die mit einem Entleerungsventil (34) ausgestattet ist.

9. Konstruktion gemäß Anspruch 1, **dadurch gekennzeichnet, dass** die Messvorrichtung (28) zusätzlich an die Konstruktion angepasste metrologische Sensoren umfasst.

10. Konstruktion gemäß einem der Ansprüche 1 bis 7, **dadurch gekennzeichnet, dass** sie mindestens einen mit einer Zugangsklappe versehenen Zugangsschacht (30) umfasst.

11. Konstruktion gemäß einem der Ansprüche 1 bis 10, **dadurch gekennzeichnet, dass** sie ein Gehäuse umfasst, das aus Materialien besteht, die aus Materialverwertungsketten stammen.

12. Konstruktion gemäß einem der Ansprüche 1 bis 11, **dadurch gekennzeichnet, dass** sie in Form eines vorgefertigten Gehäuses vorhanden ist.

13. Abflussverteiler (3), der dazu bestimmt ist, zwischen einem Hauptkollektor (1) und einem Verteilungsmedium installiert zu sein, **dadurch gekennzeichnet, dass** er eine Konstruktion (5) gemäß einem der Ansprüche 1 bis 12 umfasst, deren Eingänge (6) und Ausgänge (7) mit stromaufwärtigen (3₁) bzw. stromabwärtigen (3₂) Teilen des Abflussverteilers (3) verbunden sind.

## Claims

1. An engineering work for monitoring and controlling the flow rate and the quality of effluent in a discharge sewer (3), the work being in the form of a box having an effluent inlet (6), an effluent outlet (7), and internally defining an effluent arrival chamber (9) that includes a progressive widening (12) and an energy dissipation system (13), the arrival chamber (9) being connected to the effluent inlet (6) and including a settling zone (14) for the effluent as stabilized by the progressive widening (12) and the energy dissipation system (13), the work being provided with a measurement device (28) having at least one sensor for measuring the flow rate of the effluent in a measurement chamber (11), the work being **characterized in that** the measurement chamber (11) communicates with the arrival chamber (9) via an overflow passage (15) extending over a step (16) that is extended inside the measurement chamber by a lateral overflow (18), the measurement device (28) further including a sensor for sensing the quality of the effluent at the lateral overflow (18).

2. A work according to claim 1, **characterized in that** the lateral overflow (18) is with a throat.

3. A work according to claim 2, **characterized in that** the lateral overflow with a throat (18) has two mutually converging throat side walls (19).

4. A work according to claim 2 or claim 3, **characterized in that** the lateral overflow with a throat (18) has a throat angle lying in the range 5° to 20°.

5. A work according to any one of claims 2 to 4, **characterized in that** the lateral overflow with a throat (18) has a bottom (22) of cylindoconical shape for settling the effluent and for ensuring reliability of the measurements.

6. A work according to claim 1, **characterized in that** the progressive widening (12) of the arrival chamber (9) is connected to the effluent inlet (6) and is provided with the energy dissipation system (13), the progressive widening (12) leading into the settling zone (14).

7. A work according to claim 6, **characterized in that** the progressive widening (12) also includes a system for accelerating the flow of effluent.

8. A work according to claim 1, **characterized in that** the step (16) includes a through opening (33) fitted with a draining gate (34).

9. A work according to claim 1, **characterized in that** the measurement device (28) additionally includes measurement sensors adapted to the work.

10. A work according to any one of claims 1 to 7, **characterized in that** it includes at least one access manhole (30) provided with a manhole cover.

11. A work according to any one of claims 1 to 10, **characterized in that** it comprises a box made out of materials from materials recycling sectors.

12. A work according to any one of claims 1 to 11, **characterized in that** it is in the form of a prefabricated box.

13. A discharge sewer (3) for installing between a main sewer (1) and a discharge medium, the discharge sewer being **characterized in that** it comprises a work (5) in accordance with any one of claims 1 to 12 having its inlets (6) and outlet (7) connected respectively to upstream and downstream portions (3₁, 3₂) of the discharge sewer (3).
